(19) Europäisches Patentamt
European Patent Office
Office européen des brevets

(11) **EP 2 835 706 A1**

(12) **EUROPÄISCHE PATENTANMELDUNG**

(43) Veröffentlichungstag:
**11.02.2015 Patentblatt 2015/07**

(51) Int Cl.:
**G05B 23/02** (2006.01) **G05B 13/04** (2006.01)
**G01N 3/32** (2006.01)

(21) Anmeldenummer: **13179816.7**

(22) Anmeldetag: **09.08.2013**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Siemens Aktiengesellschaft**
**80333 München (DE)**

(72) Erfinder:
• **Gottschalk, Hanno**
**44803 Bochum (DE)**
• **Rollmann, Georg**
**45472 Mülheim Ruhr (DE)**
• **Schmitz, Sebastian**
**45473 Mülheim an der Ruhr (DE)**

(54) **Vorhersage der Versagenswahrscheinlichkeit von Maschinenbauteilen**

(57) Es wird ein Verfahren zum Bestimmen einer Versagenswahrscheinlichkeit P eines in einem Betrieb zyklisch belasteten Maschinenbauteils mit einer Geometrie $\Omega$ bis zu einem Zeitpunkt $t_0$ eingeführt. Die Rissbildung wird unter zyklischer Belastung als raum- und zeitdiskretes Ereignis betrachtet und über einen Poisson-Punktprozess unter Zugrundelegung eines Hazardansatzes modelliert. Die Erfindung bietet damit eine Möglichkeit, eine Versagenswahrscheinlichkeit eines Maschinenbauteils zu einem wählbaren Zeitpunkt zu beziffern, wodurch die Versagenswahrscheinlichkeit für Betrieb und Wartung der Maschine berücksichtigt werden kann.

**Beschreibung**

Technisches Gebiet

Die Erfindung betrifft ein Verfahren zum Bestimmen einer Versagenswahrscheinlichkeit eines in einem Betrieb zyklisch belasteten Maschinenbauteils.

Technischer Hintergrund

Während des Betriebs sind viele Bauteile von Maschinen wie beispielsweise Gasturbinen hohen thermischen und mechanischen Belastungen ausgesetzt. Im Fall von zyklischer Beanspruchung führt dies zur Ermüdung der verwendeten Materialien und dadurch zur Bildung von Rissen, was in vielen Fällen die Bauteillebensdauern begrenzt. Maßgeblich ist hier insbesondere die Kurzzeitschwingfestigkeit des Bauteils (Low-Cycle Fatigue, LCF).

Aufgrund der Streuung von Materialeigenschaften ist die Dauer bis zum Auftreten eines Anrisses nicht für alle Exemplare eines bestimmten Bauteils gleich, sondern bildet eine statistische Verteilung, die durch eine mit der Zeit ansteigende Versagenswahrscheinlichkeit gekennzeichnet ist. Da ein Versagen eines Bauteils vermieden werden soll, muss die Versagenswahrscheinlichkeit beim Festlegen von Serviceintervallen oder bei Laufzeitverlängerungen berücksichtigt werden.

Die Auslegung der Bauteile geschieht zumeist auf Basis von Materialkurven, die im Rahmen von Materialtests an standardisierten Proben bestimmt werden. Vorherrschend ist hier die deterministische Betrachtungsweise des Bauteilversagens, eine Anrisswahrscheinlichkeit wird nicht berechnet. Um vorzeitiges Materialversagen in den Bauteilen zu vermeiden, werden stattdessen eine Reihe von Sicherheitsfaktoren bei der Auslegung der Bauteile berücksichtigt. Insbesondere wird die Streuung in der Lebensdauer nicht explizit berechnet, sondern über einen festen Abschlag in der zulässigen Bauteillebensdauer berücksichtigt. Das mit zunehmender Materialermüdung steigende Versagensrisiko der Bauteile wird üblicherweise nicht quantitativ berechnet. Auch der Größeneffekt, das heißt die mit zunehmender Größe des belasteten Bereichs steigende Anrisswahrscheinlichkeit und damit abnehmende Lebensdauer des Bauteils, kann mit der herkömmlichen Herangehensweise nicht quantitativ erfasst, sondern nur im Rahmen des Sicherheitsfaktorkonzepts berücksichtigt werden.

Daher kann es dazu kommen, dass ein Bauteil unnötig lange vor dem Erreichen seiner tatsächlichen Lebensdauer ausgetauscht wird, was die Wirtschaftlichkeit der Maschine, in dem das Bauteil verbaut ist, senkt, oder dass aufgrund spezifischer Eigenschaften des Bauteils wie seiner Geometrie eine unerwartet große Streuung der Materialeigenschaften auftritt und einzelne Exemplare des Bauteils verfrüht im Betrieb ausfallen, was zu unerwünschten und ungeplanten Stillstandszeiten der Maschine und eventuell durch Folgeschäden erhöhten Wartungskosten führt.

Die Erfindung macht es sich daher zur Aufgabe, ein Verfahren zum Bestimmen einer Versagenswahrscheinlichkeit eines in einem Betrieb zyklisch belasteten Maschinenbauteils einzuführen.

Zusammenfassung der Erfindung

Die Erfindung führt ein Verfahren zum Bestimmen einer Versagenswahrscheinlichkeit P eines in einem Betrieb zyklisch belasteten Maschinenbauteils mit einer Geometrie $\Omega$ bis zu einem Zeitpunkt $t_0$ ein. Der Zeitpunkt $t_0$ wird dabei bevorzugt anhand der Anzahl der Belastungszyklen, beispielsweise der Anzahl der Maschinenstarts, definiert. Erfindungsgemäß wird die Versagenswahrscheinlichkeit P nach der Formel $P(t < t_0) = 1 - e^{-\int_0^{t_0}\int_{\partial\Omega} h(x,t)\,dx\,dt}$ bestimmt, wobei h(x, t) eine Hazardrate und $\int_{\partial\Omega} dx$ das Oberflächenintegral über die belastete Oberfläche des Maschinenbauteils bezeichnen.

Die Erfindung betrachtet die Rissbildung unter zyklischer Belastung als raum- und zeitdiskretes Ereignis und modelliert diese über einen Poisson-Punktprozess unter Zugrundelegung eines Hazardansatzes. Die Erfindung bietet damit eine Möglichkeit, eine Versagenswahrscheinlichkeit eines Maschinenbauteils zu einem wählbaren Zeitpunkt zu beziffern, wodurch die Versagenswahrscheinlichkeit für Betrieb und Wartung der Maschine berücksichtigt werden kann.

Die Hazardrate h(x, t) wird vorzugsweise als eine Weibullverteilung nach der Formel $h(x,t) = \frac{m}{t}\left(\frac{t}{t_{ref}(\varepsilon(x),T(x))}\right)^m$ bestimmt, wobei $t_{ref}$ eine charakteristische Lebensdauer des Maschinenbauteils, $\varepsilon(x)$ ein Dehnungsfeld, T(x) ein Temperaturfeld und m einen Formparameter der Weibullverteilung bezeichnen. Die charakteristische Lebensdauer $t_{ref}$ kann mit der deterministischen Lebensdauer identifiziert werden. Der Formparameter m gibt die Form der zugrundeliegenden Weibullverteilung an. Er ist typischerweise größer als 1. Der Formparameter m kann über eine Anpassung an experimentelle Testdaten bestimmt werden.

Die charakteristische Lebensdauer des Maschinenbauteils $t_{ref}$ kann gemäß einem Coffin-Manson-Basquin-Ansatz CMB nach der Formel $t_{ref}(\varepsilon,T)=CMB^{-1}(\varepsilon,T)$ bestimmt werden. Auf diese Weise hängt die charakteristische Lebensdauer $t_{ref}$ von lokalen Werten für die Temperatur und die Dehnung ab; sie ist nicht als einheitlicher Wert für das gesamte Maschinenbauteil anzusehen.

Die charakteristische Lebensdauer $t_{ref}$ wird außerdem bevorzugt nach der Formel

$$\varepsilon(t_{ref},T) = CMB(t_{ref},T) = \frac{\sigma_f'}{E}(2t_{ref})^b + \varepsilon_f'(2t_{ref})^c$$ bestimmt, wobei $\sigma'_f$, b, $\varepsilon'_f$ und c temperaturabhängige Materialkonstanten bezeichnen, die über eine Anpassung an experimentelle Testdaten bestimmt werden können. Alternativ können andere Kurvenfunktionen als der CMB-Ansatz verwendet werden, die den Zusammenhang zwischen Dehnungsamplitude und Zyklenzahl zum Versagen bei Standardmaterialermüdungstests geeignet wiedergeben.

Das Dehnungsfeld $\varepsilon(x)$ kann durch numerische Simulation bestimmt werden, beispielsweise durch eine Finite-Elemente-Rechnung unter Verwendung eines Shakedown-Verfahrens und eine nichtlineare Spannungs-Dehnungsbeziehung. Als Shakedown-Verfahren kann dabei eine Neubermethode verwendet werden. Alternativ kann das Dehnungsfeld $\varepsilon(x)$ durch eine elastische-plastische Finite-Elemente-Rechnung bestimmt werden.

Das Temperaturfeld $T(x)$ wird bevorzugt durch eine thermische Finite-Elemente-Rechnung bestimmt.

Besonders bevorzugt wird das Maschinenbauteil in Abhängigkeit von der bestimmten Versagenswahrscheinlichkeit P betrieben. Insbesondere kann das Maschinenbauteil zu dem Zeitpunkt $t_0$ gewartet, repariert oder ausgetauscht werden, wenn die bestimmte Versagenswahrscheinlichkeit P größer als eine Schwellwahrscheinlichkeit wird. Das Verfahren der Erfindung erlaubt es, den Zeitpunkt $t_0$ genau vorherzusagen, wobei der Zeitpunkt $t_0$ von einer gewählten Schwellwahrscheinlichkeit abhängt. Die verschiedenen Parameter des Verfahrens, insbesondere der Formparameter m und die temperaturabhängigen Materialkonstanten $\sigma'_f$, b, $\varepsilon'_f$ und c können dabei durch Beobachtung von ihm Betrieb befindlichen Exemplaren des jeweiligen Maschinenbauteils angepasst werden, wodurch die Bestimmung der Versagenswahrscheinlichkeit P über die Betriebszeit gesteigert werden kann. Diese Parameter können jedoch auch mit Hilfe von Standardmaterialermüdungstests kalibriert werden.

Das Maschinenbauteil kann beispielsweise ein Bauteil einer Gasturbine, einer Dampfturbine, eines Generators oder eines Strahltriebwerks oder eine Welle oder ein Flugzeugflügel sein. Bei solchen Bauteilen kann das erfindungsgemäße Verfahren besonders vorteilhaft angewendet werden.

Ausführungsbeispiel

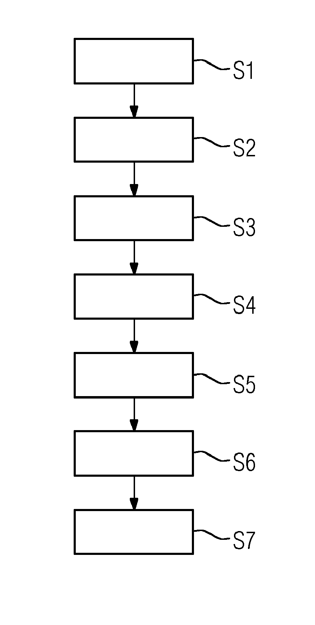

Die Erfindung wird nachfolgend anhand einer Abbildung eines Ausführungsbeispiels näher erläutert. Die einzige Figur zeigt ein Ausführungsbeispiel des erfindungsgemäßen Verfahrens als Flussdiagramm. Das Verfahren des Ausführungsbeispiels beginnt in einem ersten Schritt S1 mit der Bestimmung einer Geometrie des Maschinenbauteils, für das die Versagenswahrscheinlichkeit als Funktion der Betriebdauer oder der Maschinenstarts berechnet werden soll. Die Geometrie kann durch Vermessen des Maschinenbauteils, beispielsweise durch lasergestützte Verfahren, bestimmt werden. Es ist aber auch möglich, das für die Entwicklung und Fertigung verwendete CAD-Modell zu verwenden (CAD, Computer-Aided Design). In einem anschließenden Schritt S2 wird mittels einer thermischen Finite-Elemente-Rechnung ein Temperaturfeld ermittelt. Das Temperaturfeld gibt Aufschluss über das thermische Verhalten des Maschinenbauteils als Funktion des Ortes in oder auf dem Maschinenbauteil. In dem nachfolgenden Schritt S3 wird ein lokales Dehnungsfeld bestimmt, das ebenfalls Funktion des Ortes ist. Hierfür kann ein Shakedown-Verfahren wie die Neubermethode, eine nichtlineare Spannungs-Dehnungsbeziehung oder eine elastisch-plastische Finite-Elemente-Rechnung verwendet werden. In Schritt S4 wird eine charakteristische Lebensdauer bestimmt, wofür das zuvor bestimmte Dehnungsfeld und das Temperaturfeld in einen Coffin-Manson-Basquin-Ansatz eingehen. Dabei werden temperaturabhängige Materialkonstanten berücksichtigt, deren geeignete Werte durch Anpassung an experimentelle Testdaten bestimmt werden können. In Schritt S5 wird eine Hazardrate gemäß einem Weibullansatz bestimmt, wobei außerdem ein Exponent m für die Weibullverteilung festgelegt wird, der die Form der zugrundeliegenden Weibullverteilung definiert. Mittels der Hazardrate kann in einem Schritt S6 unter Verwendung der Geometrie des Maschinenbauteils schließlich die Versagenswahrscheinlichkeit des Maschinenbauteils durch einen Poisson-Ansatz als Funktion der Betriebsdauer beziehungsweise der Maschinenstarts bestimmt werden. Schließlich wird in einem Schritt S7 das Maschinenbauteil in Abhängigkeit von der berechneten Versagenswahrscheinlichkeit betrieben. Dies kann ein Betreiben bis zu einem Zeitpunkt, zu dem die Versagenswahrscheinlichkeit eine bestimmte Schwellwahrscheinlichkeit erreicht hat, beinhalten.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

**Patentansprüche**

1. Ein Verfahren zum Bestimmen einer Versagenswahrscheinlichkeit P eines in einem Betrieb zyklisch belasteten Maschinenbauteils mit einer Geometrie $\Omega$ bis zu einem Zeitpunkt $t_0$, **dadurch gekennzeichnet, dass**

   die Versagenswahrscheinlichkeit P nach der Formel $P(t < t_0) = 1 - e^{-\int_0^{t_0} \int_{\partial\Omega} h(x,t)dxdt}$ bestimmt wird, wobei h(x, t) eine Hazardrate bezeichnet.

2. Das Verfahren von Anspruch 1,

   bei dem die Hazardrate h(x, t) als eine Weibullverteilung nach der Formel $h(x,t) = \frac{m}{t}\left(\frac{t}{t_{ref}(\varepsilon(x),T(x))}\right)^m$ bestimmt wird,

   wobei $t_{ref}$ eine charakteristische Lebensdauer des Maschinenbauteils, $\varepsilon(x)$ ein Dehnungsfeld, T(x) ein Temperaturfeld und m einen Formparameter der Weibullverteilung bezeichnen.

3. Das Verfahren von Anspruch 2,
   bei dem der Formparameter m über eine Anpassung an experimentelle Testdaten bestimmt wird.

4. Das Verfahren von einem der Ansprüche 2 oder 3,
   bei dem die charakteristische Lebensdauer des Maschinenbauteils $t_{ref}$ gemäß einem Coffin-Manson-Basquin-Ansatz CMB nach der Formel $t_{ref}(\varepsilon,T)=CMB^{-1}(\varepsilon,T)$ bestimmt wird.

5. Das Verfahren von Anspruch 4,
   bei dem die charakteristische Lebensdauer des Maschinenbauteils $t_{ref}$ außerdem nach der Formel

   $$\varepsilon(t_{ref},T) = CMB(t_{ref},T) = \frac{\sigma'_f}{E}(2t_{ref})^b + \varepsilon'_f(2t_{ref})^c$$ bestimmt wird,

   wobei $\sigma'_f$, b, $\varepsilon'_f$ und c temperaturabhängige Materialkonstanten bezeichnen.

6. Das Verfahren von Anspruch 5,
   bei dem das Dehnungsfeld $\varepsilon(x)$ durch numerische Simulation bestimmt wird.

7. Das Verfahren von Anspruch 6,
   bei dem das Dehnungsfeld $\varepsilon(x)$ durch eine Finite-Elemente-Rechnung bestimmt wird.

8. Das Verfahren von Anspruch 7,
   bei dem das Dehnungsfeld $\varepsilon(x)$ durch ein Shakedown-Verfahren und eine nichtlineare Spannungs-Dehnungsbeziehung bestimmt wird.

9. Das Verfahren von Anspruch 8,
   bei dem als Shakedown-Verfahren eine Neubermethode verwendet wird.

10. Das Verfahren von Anspruch 7,
    bei dem das Dehnungsfeld $\varepsilon(x)$ durch eine elastische-plastische Finite-Elemente-Rechnung bestimmt wird.

11. Das Verfahren von einem der Ansprüche 2 bis 10,
    bei dem das Temperaturfeld T durch eine thermische Finite-Elemente-Rechnung bestimmt wird.

12. Das Verfahren von einem der Ansprüche 5 bis 11,
    bei dem die temperaturabhängigen Materialkonstanten $\sigma'_f$, b,
    $\varepsilon'_f$ und c über eine Anpassung an experimentelle Testdaten bestimmt werden.

13. Das Verfahren von einem der vorhergehenden Ansprüche, bei dem das Maschinenbauteil in Abhängigkeit von der bestimmten Versagenswahrscheinlichkeit P betrieben wird.

14. Das Verfahren von Anspruch 13,
bei dem das Maschinenbauteil zu dem Zeitpunkt $t_0$ gewartet, repariert oder ausgetauscht wird, wenn die bestimmte Versagenswahrscheinlichkeit P größer als eine Schwellwahrscheinlichkeit wird.

15. Das Verfahren von einem der vorhergehenden Ansprüche, bei denen das Maschinenbauteil ein Bauteil einer Gasturbine, einer Dampfturbine, eines Generators oder eines Strahltriebwerks oder eine Welle oder ein Flugzeugflügel ist.

Europäisches
Patentamt

European
Patent Office

Office européen
des brevets

# EUROPÄISCHER RECHERCHENBERICHT

Nummer der Anmeldung

EP 13 17 9816

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 2 423 664 A2 (SIEMENS AG [DE]) 29. Februar 2012 (2012-02-29) * das ganze Dokument * ----- | 1-15 | INV. G05B23/02 G05B13/04 G01N3/32 |
| X | G Rodriguez: "Chapter 7 Survival Models", , 30. September 2007 (2007-09-30), XP055090446, Princeton University, New Jersey, USA Gefunden im Internet: URL:http://data.princeton.edu/wws509/notes /c7.pdf [gefunden am 2013-11-27] * Seite 1 - Seite 22 * ----- | 1-3, 11-15 | |
| A | US 7 162 373 B1 (KADIOGLU YAVUZ [US] ET AL) 9. Januar 2007 (2007-01-09) * Spalte 2, Zeile 65 - Spalte 3, Zeile 51 * * Spalte 5, Zeile 65 - Spalte 7, Zeile 65 * ----- | 6-12 | |
| A | Robert Basan ET AL: "ON ESTIMATION OF BASQUIN-COFFIN-MANSON FATIGUE PARAMETERS OF LOW-ALLOY STEEL AISI4140", TMT, 18. September 2010 (2010-09-18), Seiten 453-456, XP055090520, 14th International Research/Expert Conference "Trends in the Development of Machinery and Associated Technology" Gefunden im Internet: URL:http://www.tmt.unze.ba/zbornik/TMT2010 /114-TMT10-031.pdf [gefunden am 2013-11-27] * das ganze Dokument * ----- | 4,5 | RECHERCHIERTE SACHGEBIETE (IPC) G05B G01N |

Der vorliegende Recherchenbericht wurde für alle Patentansprüche erstellt

| Recherchenort | Abschlußdatum der Recherche | Prüfer |
|---|---|---|
| Den Haag | 27. November 2013 | Patsiopoulos, N |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument
.........................................................................................
& : Mitglied der gleichen Patentfamilie, übereinstimmendes
Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 13 17 9816

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

27-11-2013

| Im Recherchenbericht angeführtes Patentdokument | | Datum der Veröffentlichung | Mitglied(er) der Patentfamilie | | Datum der Veröffentlichung |
|---|---|---|---|---|---|
| EP 2423664 | A2 | 29-02-2012 | EP | 2423664 A2 | 29-02-2012 |
| | | | US | 2012053858 A1 | 01-03-2012 |
| US 7162373 | B1 | 09-01-2007 | CN | 1979112 A | 13-06-2007 |
| | | | EP | 1788190 A2 | 23-05-2007 |
| | | | US | 7162373 B1 | 09-01-2007 |

EPO FORM P0461

Für nähere Einzelheiten zu diesem Anhang : siehe Amtsblatt des Europäischen Patentamts, Nr.12/82